# FASCICULE DE BREVET EUROPEEN

(11) **EP 3 587 256 B1**
(45) Date de publication et mention de la délivrance du brevet: **14.04.2021**
(21) Numéro de dépôt: 19182715.3
(22) Date de dépôt: 26.06.2019
(51) Int. Cl.: B64C 25/40

(54) **MECANISME DE VERROUILLAGE D'ACTIONNEUR DE ROUE**
VERRIEGELUNGSMECHANISMUS EINES RADSTELLERS
MECHANISM FOR LOCKING A WHEEL ACTUATOR

(30) Priorité: 26.06.2018 FR 1855741
(43) Date de publication de la demande: 01.01.2020
(73) Titulaire: Safran Landing Systems, 78140 Vélizy-Villacoublay (FR)
(72) Inventeur: BELLENGER, Vincent, 77550 MOISSY-CRAMAYEL (FR); LIEGEOIS, Pierre-Yves, 77550 MOISSY-CRAMAYEL (FR); DIJON, Fabien, 77550 MOISSY-CRAMAYEL (FR)
(74) Mandataire: Lavialle, Bruno François Stéphane

(56) Documents cités:
- WO-A1-2011/073587
- WO-A1-2015/040364
- FR-A- 1 503 853

## Description

L'invention concerne le domaine général des atterrisseurs d'aéronefs équipés d'un système d'entraînement à rotation de la roue du train d'atterrissage.

### ARRIERE PLAN DE L'INVENTION

Il est connu par exemple du document brevet FR3011531 A1, un atterrisseur pour aéronef comportant :
- au moins une roue pour le roulage de l'aéronef sur le sol ;
- un système d'entraînement à rotation de la roue mobile entre une position embrayée vis-à-vis de la roue et une position débrayée vis-à-vis de la roue ;
- un système de manœuvre relié au système d'entraînement pour le déplacer entre ses positions débrayée et embrayée.

Le système d'entraînement peut passer en position embrayée uniquement lorsque l'aéronef roule sur le sol avec une vitesse de roulage inférieure à une vitesse maximale de fonctionnement du système d'entraînement.

Dans sa position embrayée, le système d'entraînement motorise la roue et permet de déplacer l'aéronef en minimisant l'usage d'autres propulseurs consommateurs de carburant.

Si la vitesse de roulage de l'aéronef se trouve au-dessus de ladite vitesse maximale, il est alors impératif d'interdire le passage du système d'entraînement de sa position débrayée vers sa position embrayée.

Si ce système d'entraînement se trouvait en position embrayée alors que l'aéronef atterri ou roule à une vitesse supérieure à ladite vitesse maximale, il y aurait un risque de casse de l'atterrisseur ou du système d'entraînement.

Pour cette raison, le système d'entraînement doit être maintenu dans sa position débrayée pendant les phases de vol, d'atterrissage et de décollage et il est primordial de sécuriser cette position débrayée pour éviter un passage accidentelle vers la position embrayée.

### OBJET DE L'INVENTION

Un objet de la présente invention est de fournir un atterrisseur d'aéronef résolvant tout ou partie des problèmes précités.

### RESUME DE L'INVENTION

A cette fin, il est proposé selon l'invention un atterrisseur d'aéronef comportant :
- au moins une roue ;
- un support ;
- un système d'entraînement à rotation de la roue, ce système d'entrainement étant monté mobile par rapport audit support entre une position embrayée vis-à-vis de la roue et une position débrayée vis-à-vis de la roue ;
- un système de manœuvre relié au système d'entraînement pour le déplacer entre ses positions embrayée et débrayée ;
- une première paire de bielles qui sont articulées entre elles au niveau d'un premier axe d'articulation de cette première paire de bielles, cette première paire de bielles étant agencée de manière que lors du déplacement du système d'entraînement entre ses positions embrayée et débrayée, les bielles de cette première paire de bielles pivotent l'une par rapport à l'autre au niveau dudit premier axe d'articulation de cette première paire de bielles,
- un actionneur de verrouillage et au moins une première cible, l'actionneur de verrouillage étant agencé pour agir au moins sur la première cible de manière à sélectivement verrouiller ou déverrouiller le système d'entraînement dans sa position débrayée, la première cible étant portée par l'une des bielles de cette première paire de bielles.

Le fait que l'actionneur de verrouillage agisse au moins sur une première cible portée par la première bielle pour maintenir le système d'entraînement dans sa position débrayée permet de limiter l'effort de verrouillage appliqué sur la première cible et l'actionneur de verrouillage.

Comme la première bielle est pivotante autour du premier axe d'articulation de la première paire de bielles, lors du verrouillage, un couple est exercé sur cette première bielle pour interdire son pivotement. C'est l'effet bras de levier qui est fonction de la distance entre la première cible et ledit premier axe d'articulation qui permet de simplement limiter les efforts appliqués sur l'actionneur de verrouillage et la première cible lors du verrouillage.

Ainsi, les contraintes de dimensionnement de l'actionneur de verrouillage et de la première cible peuvent être limitées en termes de résistance au cisaillement et/ou de résistance à la traction et/ou de dureté du matériau constitutif de l'actionneur de verrouillage et/ou en termes de masse de cet actionneur de verrouillage.

Tant qu'il n'est pas positionné dans sa position embrayée, le système d'entraînement est toujours débrayé par rapport à la roue.

Pour la compréhension de la présente invention, dans tous les modes de réalisation, les différents axes d'articulations, articulations, axes de pivotement, pivots sont toujours disposés pour permettre des rotations autour d'une direction commune. En d'autres termes, les différents axes d'articulations sont parallèles entre eux.

### BREVE DESCRIPTION DES DESSINS

L'invention sera mieux comprise à la lumière de la description qui suit d'un mode particulier de réalisation de l'invention, en référence aux figures annexées parmi lesquelles :
la figure 1 illustre d'une part une portion de l'atterrisseur selon l'invention alors que le système d'entraînement est en position débrayée et d'autre part plusieurs composants de l'atterrisseur représentés seuls ;
la figure 2a illustre un premier mode de réalisation de l'atterrisseur 0 selon l'invention alors que le système d'entraînement 1 est dans sa position débrayée, dans ce premier mode, l'atterrisseur comporte une première paire de bielles 51, 52 articulées entre elles et respectivement articulées sur le système d'entraînement de roue 1 et sur le support 2, un actionneur de verrouillage V agissant sur une cible V1 portée par l'une de ces bielles 51 pour verrouiller le système d'entraînement en position débrayée ;
la figure 2b illustre l'atterrisseur de la figure 2a alors que le système d'entraînement est dans sa position embrayée ;

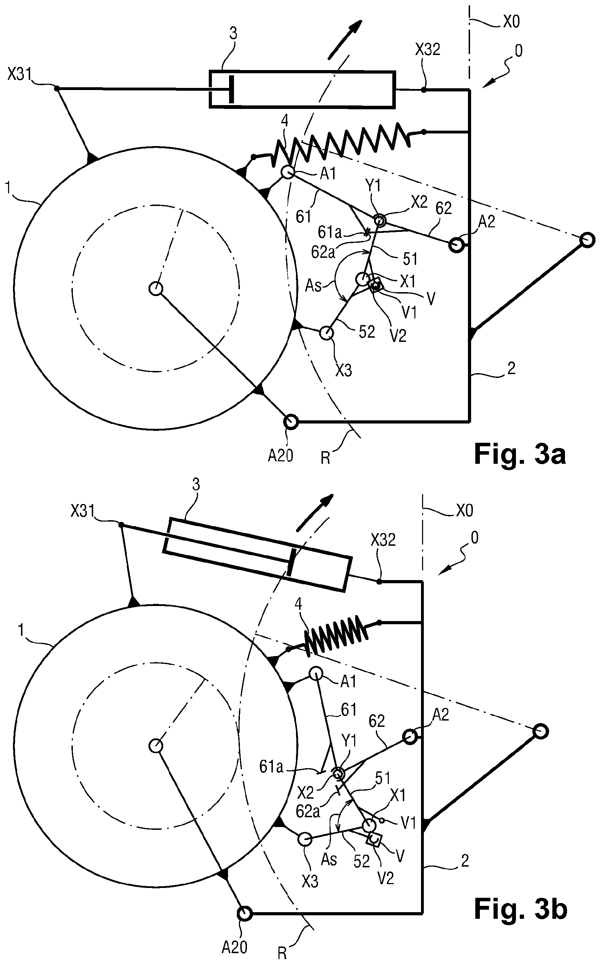

la figure 3a illustre un second mode de réalisation de l'atterrisseur 0 selon l'invention alors que le système d'entraînement 1 est dans sa position débrayée, dans ce second mode, on a une première paire de bielles 51, 52 articulées entre elles et une seconde paire de bielles 61, 62 articulées entre elles pour former une liaison articulée déformable articulée d'un côté avec système d'entraînement et d'un autre côté avec le support 2, l'une des bielles de la première paire de bielles 51 est articulée vis-à-vis d'au moins une des bielles 61, 62 de la seconde paire de bielles, ce second mode permet de minimiser les efforts de verrouillage supportés par l'actionneur de verrouillage V et par la première cible V1 ;
la figure 3b illustre l'atterrisseur de la figure 3a alors que le système d'entraînement 1 est dans sa position embrayée.

### DESCRIPTION DETAILLEE DE L'INVENTION

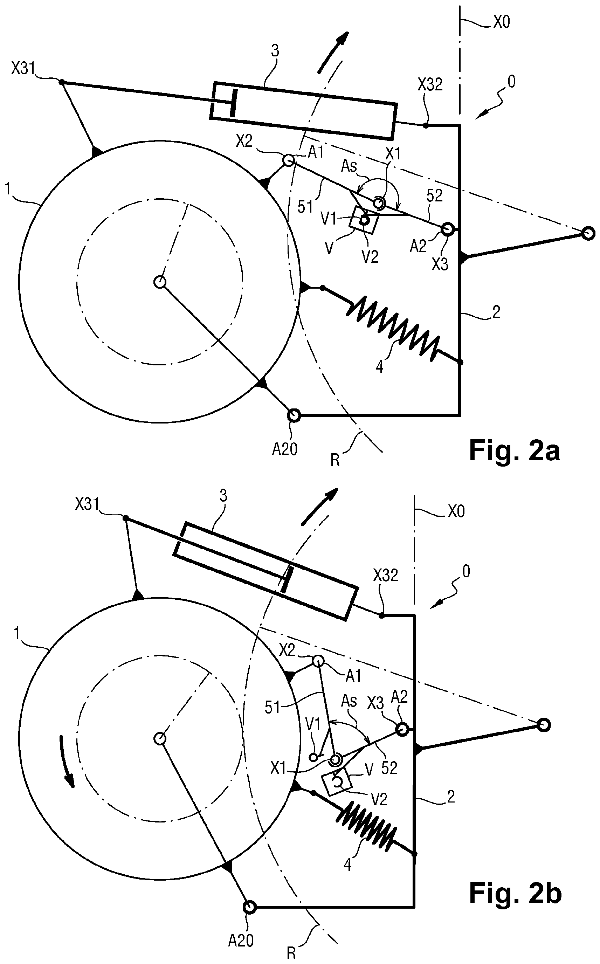

Comme indiqué précédemment, l'invention concerne un atterrisseur 0 pour aéronef. Cet atterrisseur 0 est partiellement illustré aux figures 2a, 2b et 3a, 3b et comporte une jambe portant un support 2, ce support pouvant être intégré à la jambe (la jambe et le support appartenant à une seule et même pièce) ou assemblé mécaniquement sur la jambe. Cette jambe s'étend suivant un axe longitudinal X0 d'extension de la jambe. Pour des raisons de clarté, la jambe n'est pas illustrée et seul son axe longitudinal X0 et le support 2 sont schématisés.

L'atterrisseur 0 est relié à une structure porteuse de l'aéronef via sa jambe.

Une extrémité terminale de cette jambe porte au moins un essieu autour duquel au moins une roue R est montée à rotation pour le roulage de l'aéronef sur le sol.

Pour des raisons de clarté seules des portions de la roue R sont représentées. Préférentiellement, l'axe X0 passe par l'axe de rotation de la roue R vis-à-vis du support 2.

La roue R peut être entraînée à rotation par un système d'entraînement 1 qui peut être un moteur tel qu'un moteur électrique apte à transmettre un couple d'entraînement de la roue R lorsqu'il est en position embrayée comme sur les figures 2b, 3b. Ce système d'entraînement 1 est relié à la jambe par l'intermédiaire d'un support 2. Préférentiellement ce support 2 est assemblé fixement vis-à-vis de l'essieu pour limiter les déplacements relatifs entre ce support et l'essieu. Bien entendu, la jambe et le support peuvent aussi constituer une seule et même pièce.

La roue R peut être reliée fixement à une couronne d'entraînement et dans ce cas, le système d'entraînement 1 en position embrayée sera en prise contre cette couronne par exemple par engrenage de dents.

Alternativement, le système d'entraînement 1 peut comporter un galet venant frotter directement contre la roue pour l'entraîner à rotation.

Le système d'entraînement 1 est mobile entre une position embrayée, représentée aux figures 2b et 3b, et une position de débrayée, représentée aux figure 2a et 3a.

Pour cela, le système d'entraînement 1 est monté mobile en pivotement par rapport audit support 2 par l'intermédiaire d'un axe de d'articulation principal A20.

L'atterrisseur comprend également un système de manœuvre 3 relié au système d'entraînement 1 pour le déplacer entre ses positions embrayée et débrayée.

Idéalement, ce système de manœuvre 3 n'est pas adapté à déplacer le système d'entraînement au-delà de sa position débrayée et il est uniquement adapté à le déplacer de sa position débrayée à sa position de embrayée et inversement.

La liaison entre ce système de manœuvre 3 et le système d'entraînement 1 se fait via une première articulation X31 du système de manœuvre 3.

La liaison entre ce système de manœuvre 3 et le support 2 se fait via une seconde articulation X32 du système de manœuvre 3.

Le système de manœuvre 3 comporte un vérin télescopique de type hydraulique ou éventuellement électrique.

Un moyen de rappel élastique 4 est disposé pour exercer un effort de rappel élastique du système d'entrainement 1 de sa position embrayée vers sa position débrayée. En d'autres termes, ce moyen de rappel élastique 4 est agencé pour s'opposer élastiquement au passage du système d'entraînement de sa position débrayée vers sa position embrayée et pour le rappeler dans sa position débrayée.

Le moyen élastique 4 est ici un ressort hélicoïdal compressible mais il pourrait aussi être réalisé avec une ou plusieurs lames élastiques flexibles ou avec un ressort de torsion ou un vérin à compression de gaz.

Ce moyen élastique 4 est préférentiellement articulé d'un côté avec le système d'entraînement et d'un autre côté avec le support.

Dans chacun des modes de réalisations, l'atterrisseur selon l'invention comporte au moins une première paire de bielles 51, 52 qui sont articulées entre elles au niveau d'un premier axe d'articulation X1 de cette première paire de bielles 51, 52.

Cet axe X1 est commun aux deux bielles 51, 52 pour les articuler entre elles.

Cette première paire de bielles 51, 52 est agencée de manière que lors du déplacement du système d'entraînement entre ses positions embrayée et débrayée, les bielles 51, 52 de cette première paire de bielles pivotent l'une par rapport à l'autre au niveau dudit premier axe d'articulation X1.

L'atterrisseur comporte aussi un actionneur de verrouillage V et au moins une première cible V1.

L'actionneur de verrouillage V est agencé pour agir au moins sur la première cible V1 de manière à sélectivement verrouiller ou déverrouiller le système d'entraînement 1 dans sa position débrayée. Cet actionneur de verrouillage V est agencé pour adopter sélectivement une position de verrouillage ou une position de déverrouillage.

Préférentiellement, cet actionneur de verrouillage V est muni d'un moyen de rappel élastique interne / ressort interne pour qu'en l'absence de toute alimentation en énergie de l'actionneur de verrouillage V, celui-ci adopte automatiquement sa position de verrouillage et soit maintenu dans cette position de verrouillage.

L'actionneur de verrouillage V est aussi agencé pour passer de sa position de verrouillage vers sa position de déverrouillage lorsqu'il reçoit de l'énergie de déverrouillage ayant par exemple la forme d'une commande de déverrouillage générée par une unité de commande reliée à l'actionneur de verrouillage V.

Il faut donc une énergie pour faire passer l'actionneur V en position de déverrouillage, alors qu'il n'en faut aucune pour qu'il soit, et reste, en position de verrouillage.

La première cible V1 est portée par l'une des bielles 52 de cette première paire de bielles 51, 52.

Le fait d'agir sur une cible V1 portée par une bielle 51 pour s'opposer au passage du système d'entraînement 1 de sa position débrayée vers sa position embrayée permet d'utiliser un effet de levier de cette bielle pivotante pour minimiser les efforts appliqués sur la cible et l'actionneur de verrouillage.

Les contraintes de dimensionnement de la cible V1 et de l'actionneur de verrouillage V peuvent être minimisées. Les coûts de mise en œuvre de la fonction de verrouillage peuvent également être minimisés tout en améliorant la sécurisation de la fonction de verrouillage.

L'actionneur de verrouillage peut être un vérin translatant un pêne suivant un axe de translation parallèle à l'axe X1.

Les articulations et pivots de la présente invention permettent tous des pivotements entre les pièces ainsi articulées suivant des axes de pivotement / des axes d'articulation qui sont parallèles à une même direction.

Chaque bielle donnée 51, 52 de la première paire de bielles s'étend longitudinalement le long d'un segment de droite donné propre à cette bielle donnée et passant par le premier axe d'articulation X1 et par un autre axe d'articulation propre à cette bielle donnée.

Ainsi la première bielle 51 s'étend en longueur le long d'un segment de droite passant par deux axes d'articulation X1 et X2.

De manière similaire, la seconde bielle 52 s'étend en longueur le long d'un autre segment de droite passant par deux axes d'articulations X1 et X3.

Les bielles 51, 52 de cette première paire de bielles forment, entre les segments de droites donnés propres à ces bielles, un angle saillant As dans un plan perpendiculaire au premier axe d'articulation X1. Par définition, un angle saillant est un angle supérieur à 0° et inférieur à 180°.

Cet angle saillant As est supérieur à une première valeur d'angle de 110°, préférentiellement supérieur à 160° d'angle, préférentiellement supérieur à 165° d'angle lorsque le système d'entraînement 1 se trouve dans sa position débrayée et cet angle saillant As prend une seconde valeur d'angle lorsque le système d'entraînement 1 se trouve dans sa position embrayée.

Cette seconde valeur d'angle As est strictement inférieure à ladite première valeur d'angle.

Ainsi, lors du passage du système d'entraînement 1 de sa position débrayée vers sa position embrayée, l'angle saillant As formé entre les deux bielles 51, 52 va en diminuant progressivement et passe d'une première valeur qui est supérieure à 110°, pour la position débrayée, à une seconde valeur qui est inférieure à 110° pour la position embrayée (préférentiellement cette seconde valeur est inférieure à 60% de la première valeur).

Le couple de verrouillage exercé par l'actionneur de verrouillage V sur ladite au moins une première cible V1 dépend de l'angle formé entre les bielles 51, 52.

Plus précisément, le couple mécanique de verrouillage nécessaire pour s'opposer au rapprochement de ces bielles 51, 52 l'une par rapport à l'autre par pivotement autour de l'axe X1 va en diminuant lorsque l'angle saillant As formé entre ces bielles va en augmentant.

Le choix d'une première valeur d'angle saillant As supérieure à 110° minimise grandement le couple de verrouillage nécessaire au maintien de la position débrayée.

En ce sens l'actionneur de verrouillage V peut être plus petit ce qui permet un gain de poids et d'encombrement non négligeable.

Préférentiellement, l'atterrisseur comporte une seconde cible V2 portée par l'autre des bielles 52 de cette première paire de bielles. L'actionneur de verrouillage V est agencé pour agir simultanément sur les première et seconde cibles V1, V2 pour verrouiller le système d'entraînement 1 dans sa position débrayée. Ce couplage améliore l'effet de verrouillage.

Afin de réaliser ce verrouillage sélectif, l'actionneur de verrouillage V comporte un pêne et ladite première cible V1 forme une première gâche prévue pour recevoir le pêne lorsque l'actionneur de verrouillage se trouve dans une configuration de verrouillage et que le système d'entraînement 1 se trouve dans sa position débrayée.

De manière similaire, dans le mode de réalisation où l'atterrisseur comporte une seconde cible V2, cette seconde cible V2 forme une seconde gâche prévue pour recevoir ledit pêne de l'actionneur de verrouillage V lorsque l'actionneur de verrouillage se trouve dans une configuration de verrouillage et que le système d'entraînement 1 se trouve dans sa position débrayée.

Typiquement, la première cible V1 peut être une perforation pratiquée dans la première bielle 51 de la première paire de bielles 51, 52 et la seconde cible V2 peut être une perforation pratiquée dans la deuxième bielle 52 de la première paire de bielles 51, 52. Ces perforations V1, V2 pratiquées dans ces bielles 51 et 52 sont alignées entre elles lorsque le système d'entraînement se trouve dans sa position débrayée pour que le pêne de l'actionneur de verrouillage V puisse s'étendre dans chacune de ces perforations pour immobiliser ces bielles 51, 52 l'une par rapport à l'autre.

Ainsi, l'actionneur de verrouillage est agencé pour agir simultanément sur la première cible V1 et sur la seconde cible V2 de manière à réaliser ledit verrouillage ou déverrouillage sélectif de la position débrayée.

L'atterrisseur selon l'invention comporte aussi une unité de commande reliée audit système de manœuvre 3 pour commander le système de manœuvre 3 afin de sélectivement déplacer le système d'entraînement vers sa position débrayée ou vers sa position embrayée.

Cette unité de commande est également reliée audit actionneur de verrouillage V pour commander son déplacement d'une position de verrouillage vers une position de déverrouillage. En position de verrouillage l'actionneur V verrouille le système d'entraînement 1 dans sa position débrayée et en position de déverrouillage, il déverrouille le système d'entraînement 1 pour autoriser son déplacement à l'écart de sa position débrayée.

Dans le mode de réalisation des figures 2a et 2b l'une des bielles 51 de la première paire de bielles est articulée vis-à-vis du système d'entraînement 1 alors que l'autre des bielles 52 de la première paire de bielles est articulée vis-à-vis du support 2.

La première bielle 51 est articulée vis-à-vis du système d'entraînement 1 via un premier axe d'articulation secondaire A1 et la seconde des bielles 52 est articulée vis-à-vis du support 2 via un second axe d'articulation secondaire A2.

Ce mode présente l'avantage d'avoir une seule paire de bielles 51, 52 pour relier le système d'entraînement 1 au support 2 et le verrouillage se fait ainsi directement sur cette seule paire de bielles 51, 52.

L'inconvénient de cette solution est que l'effort de verrouillage exercé sur l'actionneur de verrouillage reste important puisque cette première paire de bielles permet une reprise limitée des efforts de déplacement du système d'entraînement 1 vers sa position embrayée.

Afin de limiter cet inconvénient, il est proposé le mode de réalisation préférentiel présenté ci-après en référence aux figures 3a et 3b.

Dans ce mode, l'atterrisseur 0 comporte une seconde paire de bielles 61, 62 qui sont articulées entre elles au niveau d'un premier axe d'articulation Y1 de cette seconde paire de bielles 61, 62.

Cette seconde paire de bielles 61, 62 est agencée de manière que lors du déplacement du système d'entraînement 1 entre ses positions embrayée et débrayée, les bielles 61, 62 de cette seconde paire de bielles pivotent l'une par rapport à l'autre au niveau dudit premier axe d'articulation Y1.

L'une au moins des bielles 61,62, en l'occurrence les deux bielles 61, 62 sont reliées à l'une des bielles 51, 52 de la première paire de bielles via une liaison pivot. Cette liaison pivot est telle que le pivotement des bielles 61, 62 de la seconde paire de bielles l'une par rapport à l'autre entraîne le pivotement des bielles 51, 52 de la première paire de bielles l'une par rapport à l'autre.

De cette manière, grâce à la liaison pivot entre l'une des bielles 51 de la première paire de bielles et l'une au moins des bielles de la seconde paire de bielles 61, 62, les efforts de déplacement du système d'entraînement 1 vers sa position embrayée sont d'abord repris et minimisés via la seconde paire de bielles 61, 62 puis via la première paire de bielles 51, 52.

Ceci permet un verrouillage efficace en appliquant des efforts de verrouillage plus faibles au niveau de la première cible portée par la première bielle 51 de la première paire de bielles.

Les exigences de dimensionnement de l'actionneur de verrouillage V sont à nouveau minimisées.

Préférentiellement, ladite liaison pivot reliant l'une au moins une des bielles 61,62 de la seconde paire de bielles à l'une des bielles 51, 52 de la première paire de bielles est une liaison pivot suivant ledit premier axe d'articulation Y1 de la seconde paire de bielles 61, 62.

En d'autres termes cette liaison pivot reliant l'une au moins des bielles de la seconde paire de bielle 61, 62 à l'une des bielles de la première paire de bielles se fait suivant un axe de pivotement qui est confondu avec le premier axe d'articulation Y1.

Mécaniquement parlant, ce premier axe d'articulation Y1 peut être réalisé par une pièce de révolution servant d'une part d'axe d'articulation des bielles 61, 62 l'une par rapport à l'autre et d'autre part d'axe d'articulation d'une des bielles 51 de la première paire de bielles par rapport aux bielles de la seconde paire de bielles.

Préférentiellement, comme illustré par les figures 3a et 3b, l'une des bielles 61 de la seconde paire de bielles 61, 62 est articulée vis-à-vis du système d'entraînement 1 alors que l'autre des bielles 62 de la seconde paire de bielles est articulée vis-à-vis du support 2.

Plus précisément, une première des bielles 61 de la seconde paire de bielles 61, 62 est articulée vis-à-vis du système d'entraînement 1 via un premier axe d'articulation secondaire A1 et la seconde des bielles 62 de la seconde paire de bielles 61, 62 est articulée vis-à-vis du support 2 via un second axe d'articulation secondaire A2.

Préférentiellement, l'une des bielles 61 de la seconde paire de bielles 61, 62 porte une première butée 61a et l'autre des bielles 62 de la seconde paire de bielles porte une seconde butée 62a.

Ces première et seconde butées 61a, 62a sont disposées pour être en contact l'une contre l'autre lorsque le système d'entraînement 1 se trouve dans sa position débrayée pour s'opposer au déplacement du système d'entraînement au-delà de sa position débrayée en s'écartant de sa position embrayée. Ces première et seconde butées 61a, 62a sont éloignées l'une de l'autre tant que le système d'entraînement 1 est positionné à l'écart de sa position débrayée et se trouve entre sa position débrayée et sa position embrayée.

Ces butées 61a, 62a permettent d'encaisser les efforts qui tendraient à déplacer le système d'entraînement 1 au-delà de sa position débrayée en s'écartant de sa position embrayée.

Ainsi, dans le mode de réalisation des figures 3a et 3b où l'on a des première et seconde paire de bielles, les butées 61a et 62a sont portées sur la seconde paire de bielles 61, 62 alors que les première et seconde cibles V1, V2 sont portées par la première paire de bielles 51, 52.

Dans le mode de réalisation des figures 2a et 2b, la première bielle 51 de la première paire de bielles porte une première butée par exemple formée au niveau de la première cible V1 et la deuxième bielle 52 peut aussi comporter une seconde butée, par exemple formée au niveau de la seconde cible V2.

Dans ces deux modes des figures 2a, 2b, 3a, 3b, ces première et seconde butées s'opposant toujours au passage du système d'entraînement 1 au-delà de sa position de débrayée et elles définissent ainsi cette position débrayée.

Bien entendu, on pourrait avoir une butée portée par le support 2 pour s'opposer au déplacement du système d'entraînement au-delà de sa position débrayée en venant buter contre ce système d'entraînement.

Comme le moyen de rappel élastique 4 exerce un effort favorisant le maintien du système d'entraînement dans la position de débrayée avec les première et seconde butées en contact l'une contre l'autre, en cas de défaillance du système de manœuvre 3, le système d'entraînement 1 est déplacé à l'écart de sa position embrayée vers la position de débrayée et le moyen de rappel élastique 4 s'oppose à ce que le système d'entraînement s'écarte de cette position de sécurité.

Le système d'entraînement 1 est alors sécurisé dans sa position débrayée grâce au moyen élastique de rappel 4.

En cas de défaut de fonctionnement du système de manœuvre 3, par exemple en cas de casse mécanique du système de manœuvre, le moyen de rappel élastique 4 favorise le passage du système d'entraînement 1 vers sa position de débrayée. Le risque d'embrayage accidentel avec la roue est ainsi réduit.

Préférentiellement, le système de manœuvre 3, qui comprend ici un vérin hydraulique, est dimensionné pour que l'effort maximum qu'il puisse générer pour forcer le passage du système d'entraînement de sa position débrayée vers sa position embrayée soit supportable par l'actionneur de verrouillage V et la première cible V1 pour maintenir le verrouillage et par conséquent maintenir le système d'entraînement dans sa position débrayée.

Pour cela, le système de manœuvre 3 peut présenter une section active de piston hydraulique telle que même en alimentant le système de manœuvre à sa pression de service prédéterminée, le passage vers la position embrayée reste impossible tant que le système de verrouillage se trouve verrouillé.

Ainsi, grâce à l'invention deux conditions doivent être cumulées pour permettre le passage du système d'entraînement 1 de sa position débrayée vers la position embrayée.

Il faut d'une part que le système de manœuvre 3 soit commandé pour déplacer le système d'entraînement 1 vers sa position embrayée et il faut d'autre part que l'actionneur de verrouillage V soit commandé pour être déverrouillé.

Ceci permet une double sécurisation de la position débrayée.

En cas de défaut simple du système de manœuvre 3, par exemple un défaut d'alimentation en énergie de manœuvre du vérin, le moyen de rappel élastique 4 force alors le déplacement du système d'entraînement vers sa position débrayée qui est atteinte lorsque les butées 61a, 62a arrivent en contact l'une contre l'autre.

Idéalement les positions respectives de la ou des cibles et/ou de la ou des butées et/ou de l'actionneur de verrouillage sont ajustables pour pouvoir ajuster les positions embrayée et débrayée.

L'invention permet aussi de ségréger les fonctions :
- de rappel élastique du système d'entraînement (via les moyens de rappel élastique) ;
- de manœuvre de ce système d'entraînement (via le système de manœuvre et cela tant que le vérin est manœuvrable entre ses configurations extrêmes) ; et
- de maintien en sécurité du système d'entraînement par l'intermédiaire de la mise en contact des première et seconde butées portées par les bielles de la première paire de bielles.

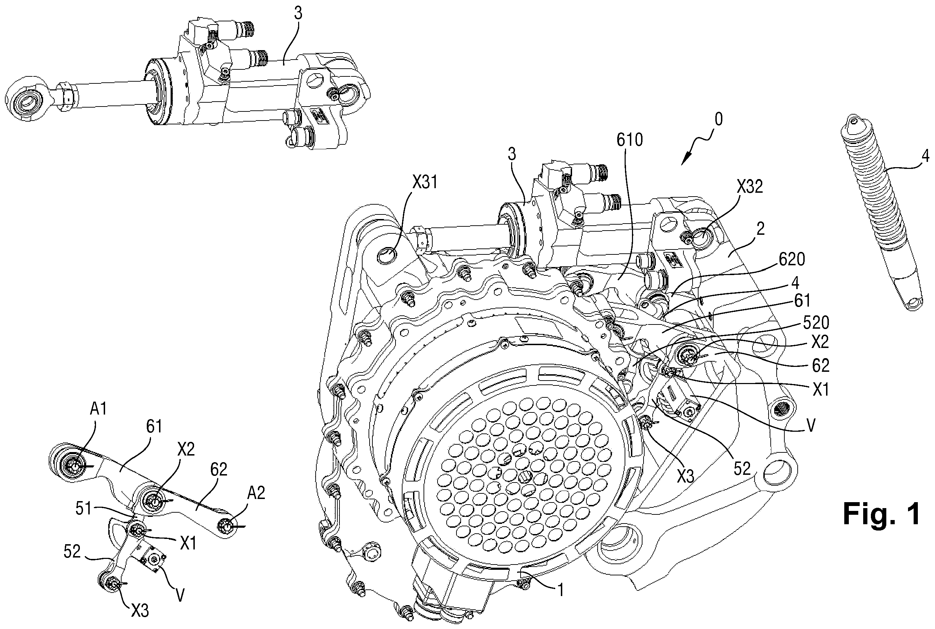

Il est à noter que pour diminuer les efforts appliqués sur l'actionneur de verrouillage V et les cibles V1, V2, on peut, comme sur l'exemple de la figure 1, faire en sorte d'avoir deux premières paires de bielles 51, 52, 520 distinctes l'une de l'autre et deux actionneurs de verrouillage V. Ces deux premières paires de bielles sont identiques entre elles et elles sont disposées pour que leurs premiers axes d'articulation X1 soient toujours coaxiaux entre eux.

Chacune de ces deux premières paires de bielles porte une première cible et les efforts de verrouillage sont ainsi répartis entre les deux actionneurs de verrouillage V et les deux premières cibles.

Dans ce mode, comme dans celui présenté aux figures 3a et 3b, on a également deux secondes paires de bielles identiques entre elles 61, 62 et 610.

Ces deux secondes paires de bielles 61, 62 et 610 sont disposées pour que leurs premiers axes d'articulation X2 soient toujours coaxiaux entre eux.

Bien entendu, le nombre d'actionneurs de verrouillage V, de cibles V1, V2 portées par les bielles ou de paires de bielles articulées pourrait varier tout en restant conforme à l'esprit de la présente invention.

Enfin, il est à noter qu'alors que l'actionneur de verrouillage V est porté par l'une des bielles de la première paire de bielles articulées, il pourrait aussi être fixé sur le support 2.

## Revendications

1. Atterrisseur d'aéronef (0) comportant :
- au moins une roue (R) ;
- un support (2) ;
- un système d'entraînement (1) à rotation de la roue, ce système d'entrainement (1) étant monté mobile par rapport audit support (2) entre une position embrayée vis-à-vis de la roue (R) et une position débrayée vis-à-vis de la roue ;
- un système de manœuvre (3) relié au système d'entraînement (1) pour le déplacer entre ses positions embrayée et débrayée ;
- une première paire de bielles (51, 52) qui sont articulées entre elles au niveau d'un premier axe d'articulation (X1) de cette première paire de bielles (51, 52), cette première paire de bielles étant agencée de manière que lors du déplacement du système d'entraînement entre ses positions embrayée et débrayée, les bielles (51, 52) de cette première paire de bielles pivotent l'une par rapport à l'autre au niveau dudit premier axe d'articulation (X1) de cette première paire de bielles,
et - un actionneur de verrouillage (V) ,
**caractérisé par** au moins une première cible (V1), l'actionneur de verrouillage (V) étant agencé pour agir au moins sur la première cible (V1) de manière à sélectivement verrouiller ou déverrouiller le système d'entraînement (1) dans sa position débrayée, la première cible (V1) étant portée par l'une des bielles (52) de cette première paire de bielles (51, 52).

2. Atterrisseur d'aéronef selon la revendication 1, dans lequel chaque bielle donnée (51, 52) de cette première paire de bielles s'étend longitudinalement le long d'un segment de droite donné propre à cette bielle donnée et passant par le premier axe d'articulation (X1) et par un autre axe d'articulation propre à cette bielle donnée, les bielles (51, 52) de cette première paire de bielles forment, entre les segments de droites donnés propres à ces bielles, un angle saillant (As) dans un plan perpendiculaire au premier axe d'articulation (X1), cet angle saillant (As) étant supérieur à une première valeur d'angle de 110° lorsque le système d'entraînement (1) se trouve dans sa position débrayée et cet angle saillant (As) prenant une seconde valeur d'angle lorsque le système d'entraînement (1) se trouve dans sa position embrayée, cette seconde valeur d'angle étant strictement inférieure à ladite première valeur d'angle.

3. Atterrisseur d'aéronef selon l'une quelconque des revendications 1 ou 2, comportant en outre une seconde cible portée par l'autre des bielles de cette première paire de bielles, l'actionneur de verrouillage (V) étant agencé pour agir simultanément sur la première cible (V1) et la seconde cible (V2) pour verrouiller le système d'entraînement (1) dans sa position débrayée.

4. Atterrisseur d'aéronef selon l'une quelconque des revendications 1 à 3, comportant une seconde paire de bielles (61, 62) qui sont articulées entre elles au niveau d'un premier axe d'articulation (Y1) de cette seconde paire de bielles (61, 62), cette seconde paire de bielles (61, 62) étant agencée de manière que lors du déplacement du système d'entraînement entre ses positions embrayée et débrayée, les bielles (61, 62) de cette seconde paire de bielles pivotent l'une par rapport à l'autre au niveau dudit premier axe d'articulation (Y1) de cette seconde paire de bielles (61, 62), l'une au moins des bielles (61, 62) de cette seconde paire de bielles étant reliée à l'une au moins des bielles (51, 52) de la première paire de bielles via une liaison pivot de manière que le pivotement des bielles (61, 62) de la seconde paire de bielles l'une par rapport à l'autre entraîne le pivotement des bielles (51, 52) de la première paire de bielles l'une par rapport à l'autre.

5. Atterrisseur d'aéronef selon la revendication 4, dans lequel ladite liaison pivot reliant l'une au moins des bielles (61, 62) de la seconde paire de bielles à l'une des bielles (51, 52) de la première paire de bielles est une liaison pivot suivant ledit premier axe d'articulation (Y1) de la seconde paire de bielles (61, 62).

6. Atterrisseur d'aéronef selon l'une quelconque des revendications 4 ou 5, dans lequel l'une des bielles (61) de la seconde paire de bielles (61, 62) est articulée vis-à-vis du système d'entraînement (1) alors que l'autre des bielles (62) de la seconde paire de bielles est articulée vis-à-vis du support (2).

7. Atterrisseur selon l'une au moins des revendications 4 à 6 dans lequel l'une des bielles (61) de la seconde paire de bielles (61, 62) porte une première butée (61a) et l'autre des bielles (62) de la seconde paire de bielles porte une seconde butée (62a), ces première et seconde butées étant en contact l'une contre l'autre lorsque le système d'entraînement (1) se trouve dans sa position débrayée pour s'opposer au déplacement du système d'entraînement au-delà de sa position débrayée en s'écartant de sa position embrayée et ces première et seconde butées étant éloignées l'une de l'autre tant que le système d'entraînement (1) est positionné à l'écart de sa position débrayée et se trouve entre sa position débrayée et sa position embrayée.

8. Atterrisseur d'aéronef selon l'une quelconque des revendications 1 à 3 dans lequel l'une des bielles (51) de la première paire de bielles est articulée vis-à-vis du système d'entraînement (1) alors que l'autre des bielles (52) de la première paire de bielles est articulée vis-à-vis du support (2).

9. Atterrisseur selon l'une quelconque des revendications 1 à 8, dans lequel l'actionneur de verrouillage (V) comporte un pêne et ladite première cible (V1) forme une première gâche prévue pour recevoir le pêne lorsque l'actionneur de verrouillage se trouve dans une configuration de verrouillage et que le système d'entraînement (1) se trouve dans sa position débrayée.

10. Atterrisseur selon l'une quelconque des revendications 1 à 9, comportant une unité de commande reliée audit système de manœuvre (3) pour commander le système de manœuvre afin de sélectivement déplacer le système de manœuvre vers sa position débrayée ou vers sa position embrayée, cette unité de commande étant également reliée audit actionneur de verrouillage pour commander son déplacement d'une position de verrouillage vers une position de déverrouillage, cet actionneur de verrouillage (V) placé en position de verrouillage étant adapté à verrouiller le système d'entraînement dans sa position débrayée et cet actionneur de verrouillage (V) placé en position de déverrouillage étant adapté à déverrouiller le système d'entraînement pour autoriser son déplacement à l'écart de sa position débrayée.

11. Atterrisseur selon l'une quelconque des revendications 1 à 10, comportant un moyen de rappel élastique agencé pour s'opposer élastiquement au passage du système d'entraînement de sa position débrayée vers sa position embrayée et pour rappeler le système d'entraînement dans sa position débrayée.

12. Atterrisseur selon l'une quelconque des revendications 1 à 11, dans lequel le système d'entraînement (1) à rotation de la roue est monté mobile en pivotement par rapport audit support (2) par l'intermédiaire d'un axe de d'articulation principal (A20).

## Patentansprüche

1. Luftfahrzeugfahrwerk (0), umfassend:
- mindestens ein Rad (R);
- einen Träger (2);
- ein Antriebssystem (1) zum Drehantrieb des Rades, wobei dieses Antriebssystem (1) relativ zum genannten Träger (2) zwischen einer relativ zum Rad (R) eingerückten Position und einer relativ zum Rad (R) ausgerückten Position beweglich gelagert ist;
- ein Manövriersystem (3), das mit dem Antriebssystem (1) verbunden ist, um es zwischen seiner eingerückten Position und seiner ausgerückten Position zu bewegen;
- ein erstes Paar von Stangen (51, 52), die im Bereich einer ersten Gelenkverbindungsachse (X1) dieses ersten Paares von Stangen (51, 52) aneinander angelenkt sind, wobei dieses erste Paar von Stangen so ausgebildet ist, dass sich die Stangen (51, 52) dieses ersten Paares von Stangen bei der Bewegung des Antriebssystems zwischen seiner eingerückten und seiner ausgerückten Position im Bereich der genannten ersten Gelenkverbindungsachse (X1) dieses ersten Paares von Stangen relativ zueinander verschwenken, und
- einen Verriegelungsaktor (V), der **gekennzeichnet ist durch** mindestens ein erstes Ziel (V1), wobei der Verriegelungsaktor (V) ausgebildet ist, um zumindest auf das erste Ziel (V1) derart einzuwirken, dass das Antriebssystem (1) in seiner ausgerückten Position selektiv verriegelt oder entriegelt wird, wobei das erste Ziel (V1) von einer der Stangen (52) dieses ersten Paares von Stangen (51, 52) getragen wird.

2. Luftfahrzeugfahrwerk nach Anspruch 1, bei dem sich jede gegebene Stange (51, 52) dieses ersten Paares von Stangen in Längsrichtung entlang einer gegebenen Strecke, die für diese gegebene Stange spezifisch ist, erstreckt und durch die erste Gelenkverbindungsachse (X1) und durch eine weitere Gelenkverbindungsachse, die für diese gegebene Stange spezifisch ist, verläuft, wobei die Stangen (51, 52) dieses ersten Paares von Stangen zwischen den gegebenen Strecken, die für diese Stangen spezifisch sind, einen ausspringenden Winkel (As) in einer Ebene senkrecht zur ersten Gelenkverbindungsachse (X1) bilden, wobei dieser ausspringende Winkel (As) größer als ein erster Winkelwert von 110° ist, wenn sich das Antriebssystem (1) in seiner ausgerückten Position befindet, und dieser ausspringende Winkel (As) einen zweiten Winkelwert annimmt, wenn sich das Antriebssystem (1) in seiner eingerückten Position befindet, wobei dieser zweite Winkelwert strikt kleiner als der genannte erste Winkelwert ist.

3. Luftfahrzeugfahrwerk nach einem der Ansprüche 1 oder 2, ferner umfassend ein zweites Ziel, das von der anderen der Stangen dieses ersten Paares von Stangen getragen wird, wobei der Verriegelungsaktor (V) so ausgebildet ist, dass er gleichzeitig auf das erste Ziel (V1) und das zweite Ziel (V2) einwirkt, um das Antriebssystem (1) in seiner ausgerückten Position zu verriegeln.

4. Luftfahrzeugfahrwerk nach einem der Ansprüche 1 bis 3, umfassend ein zweites Paar von Stangen (61, 62), die im Bereich einer ersten Gelenkverbindungsachse (Y1) dieses zweiten Paares von Stangen (61, 62) aneinander angelenkt sind, wobei dieses zweite Paar von Stangen (61, 62) so ausgebildet ist, dass sich die Stangen (61, 62) dieses zweiten Paares von Stangen bei der Bewegung des Antriebssystems zwischen seiner eingerückten und seiner ausgerückten Position im Bereich der genannten ersten Gelenkverbindungsachse (Y1) relativ zueinander verschwenken, wobei mindestens eine der Stangen (61, 62) dieses zweiten Paares von Stangen mit mindestens einer der Stangen (51, 52) des ersten Paares von Stangen über eine Schwenkverbindung derart zusammenwirkt, dass das Verschwenken der Stangen (61, 62) des zweiten Paares von Stangen relativ zueinander das Verschwenken der Stangen (51, 52) des ersten Paares von Stangen relativ zueinander verursacht.

5. Luftfahrzeugfahrwerk nach Anspruch 4, bei dem die genannte Schwenkverbindung, die mindestens eine der Stangen (61, 62) des zweites Paares von Stangen mit einer der Stangen (51, 52) des ersten Paares von Stangen verbindet, eine Schwenkverbindung um die genannte erste Gelenkverbindungsachse (Y1) des zweiten Paares von Stangen (61, 62) ist.

6. Luftfahrzeugfahrwerk nach einem der Ansprüche 4 oder 5, bei dem eine der Stangen (61) des zweiten Paares von Stangen (61, 62) relativ zum Antriebssystem (1) angelenkt ist, während die andere der Stangen (62) des zweiten Paares von Stangen relativ zum Träger (2) angelenkt ist.

7. Fahrwerk nach mindestens einem der Ansprüche 4 bis 6, bei dem eine der Stangen (61) des zweiten Paares von Stangen (61, 62) einen ersten Anschlag (61a) trägt und die andere der Stangen (62) des zweiten Paares von Stangen einen zweiten Anschlag (62a) trägt, wobei dieser erste und dieser zweite Anschlag in Kontakt miteinander sind, wenn sich das Antriebssystem (1) in seiner ausgerückten Position befindet, um sich der Bewegung des Antriebssystems über seine ausgerückte Position hinaus weg von seiner eingerückten Position zu widersetzen, und wobei dieser erste und dieser zweite Anschlag voneinander entfernt sind, solange das Antriebssystem (1) weg von seiner ausgerückten Position positioniert ist und sich zwischen seiner ausgerückten Position und seiner eingerückten Position befindet.

8. Luftfahrzeugfahrwerk nach einem der Ansprüche 1 bis 3, bei dem eine der Stangen (51) des ersten Paares von Stangen relativ zum Antriebssystem (1) angelenkt ist, während die andere der Stangen (52) des ersten Paares von Stangen relativ zum Träger (2) angelenkt ist.

9. Fahrwerk nach einem der Ansprüche 1 bis 8, bei dem der Verriegelungsaktor (V) einen Riegel umfasst und das genannte erste Ziel (V1) ein erstes Schließblech bildet, das vorgesehen ist, um den Riegel aufzunehmen, wenn sich der Verriegelungsaktor in einer Verriegelungskonfiguration befindet und wenn sich das Antriebssystem (1) in seiner ausgerückten Position befindet.

10. Fahrwerk nach einem der Ansprüche 1 bis 9, umfassend eine Steuereinheit, die mit dem Manövriersystem (3) verbunden ist, um das Manövriersystem zu steuern, damit das Manövriersystem selektiv in seine ausgerückte Position oder in seine eingerückte Position bewegt wird, wobei diese Steuereinheit ferner mit dem genannten Verriegelungsaktor verbunden ist, um seine Bewegung von einer Verriegelungsposition in eine Entriegelungsposition zu steuern, wobei dieser in der Verriegelungsposition angeordnete Verriegelungsaktor (V) geeignet ist, das Antriebssystem in seiner ausgerückten Position zu verriegeln, und wobei dieser in seiner Entriegelungsposition angeordnete Verriegelungsaktor (V) geeignet ist, das Antriebssystem zu entriegeln, um dessen Bewegung weg von seiner ausgerückten Position zu gestatten.

11. Fahrwerk nach einem der Ansprüche 1 bis 10, umfassend elastische Rückstellmittel, die ausgebildet sind, um sich elastisch dem Übergang des Antriebssystems von seiner ausgerückten Position in seine eingerückte Position zu widersetzen und um das Antriebssystem in seine ausgerückte Position rückzustellen.

12. Fahrwerk nach einem der Ansprüche 1 bis 11, bei dem das Antriebssystem (1) zum Drehantrieb des Rades in Bezug auf den Träger (2) über eine Hauptgelenkverbindungsachse (A20) schwenkbar gelagert ist.

## Claims

1. An aircraft undercarriage (0) comprising:
- at least one wheel (R);
- a support (2);
- a drive system (1) for driving rotation of the wheel, the drive system (1) being movable relative to said support (2) between an engaged position relative to the wheel (R) and a disengaged position relative to the wheel;
- a mover system (3) connected to the drive system (1) in order to move it between its engaged and disengaged positions;
- a first pair of links (51, 52) that are hinged to each other about a first hinge axis (X1) of this first pair of links (51, 52), this first pair of links being arranged in such a manner that during the movement of the drive system between its engaged and disengaged positions, the links (51, 52) of this first pair of links pivot relative to each other about said first hinge axis (X1) of this first pair of links; and
- a locking actuator (V),
**characterized in that** at least one first target (V1), the locking actuator (V) being arranged to act at least on the first target (V1) in such a manner as to lock or unlock selectively the drive system (1) in its disengaged position, the first target (V1) being carried by one of the links (52) of the first pair of links (51, 52).

2. An aircraft undercarriage according to claim 1, wherein each given link (51, 52) of this first pair of links extends longitudinally along a given straight line segment specific to the given link and intersecting the first hinge axis (X1) and another hinge axis specific to that given link, the links (51, 52) of the first pair of links forming, between the given straight lines specific to these links, a salient angle (As) in a plane perpendicular to the first hinge axis (X1), this salient angle (As) being greater than a first angle value of 110° when the drive system (1) is in its disengaged position and this salient angle (As) taking a second angle value when the drive system (1) is in its engaged position, this second angle value being strictly less than said first angle value.

3. An aircraft undercarriage according to claim 1 or claim 2, further comprising a second target carried by the other one of the links of this first pair of links, the locking actuator (V) being arranged to act simultaneously on the first target (V1) and on the second target (V2) in order to lock the drive system (1) in its disengaged position.

4. An aircraft undercarriage according to any one of claims 1 to 3, having a second pair of links (61, 62) that are hinged to each other about a first hinge axis (Y1) of this second pair of links (61, 62), this second pair of links (61, 62) being arranged so that during the movement of the drive system between its engaged and disengaged positions, the links (61, 62) of this second pair of links pivot relative to each other about said first hinge axis (Y1) of this second pair of links (61, 62), at least one of the links (61, 62) of this second pair of links being connected to at least one of the links (51, 52) of the first pair of links via a pivot connection so that pivoting of the links (61, 62) of the second pair of links relative to each other drives pivoting of the links (51, 52) of the first pair of links relative to each other.

5. An aircraft undercarriage according to claim 4, wherein said pivot connection connecting at least one of the links (61, 62) of the second pair of links to one of the links (51, 52) of the first pair of links is a pivot connection about said first hinge axis (Y1) of the second pair of links (61, 62).

6. An aircraft undercarriage according to claim 4 or claim 5, wherein one of the links (61) of the second pair of links (61, 62) is hinged relative to the drive system (1), while the other links (62) of the second pair of links is hinged relative to the support (2).

7. An undercarriage according to any one of claims 4 to 6, wherein one of the links (61) of the second pair of links (61, 62) carries a first abutment (61a) and the other links (62) of the second pair of links carries a second abutment (62a), these first and second abutments coming into contact with each other when the drive system (1) is in its disengaged position so as to oppose movement of the drive system beyond its disengaged position away from its engaged position, and the first and second abutments being spaced apart from each other so long as the drive system (1) is positioned away from its disengaged position and lies between its disengaged position and its engaged position.

8. An aircraft undercarriage according to any one of claims 1 to 3, wherein one of the links (51) of the first pair of links is hinged relative to the drive system (1), while the other link (52) of the first pair of links is hinged relative to the support (2).

9. An undercarriage according to any one of claims 1 to 8, wherein the locking actuator (V) includes a bolt, and said first target (V1) forms a first striker provided to receive the bolt when the locking actuator is in a locking configuration and the drive system (1) is in its disengaged position.

10. An undercarriage according to any one of claims 1 to 9, including a control unit connected to said mover system (3) in order to control the mover system so as to cause the drive system to move selectively towards its disengaged position or its engaged position, the control unit also being connected to said locking actuator to control it to move from a locking position to an unlocking position, the locking actuator (V) placed in the locking position being adapted to lock the drive system in its disengaged position, and the locking actuator (V) placed in the unlocking position being adapted to unlock the drive system to allow it to move away from its disengaged position.

11. An undercarriage according to any one of claims 1 to 10, including resilient return means arranged to oppose resiliently the drive system passing from its disengaged position towards its engaged position so as to urge the drive system into its disengaged position.

12. An undercarriage according to any one of claims 1 to 11, wherein the drive system (1) for driving rotation of the wheel is pivotally mounted to move relative to said support (2) about a main hinge axis (A20).
